# EUROPEAN PATENT SPECIFICATION

(11) **EP 3 722 112 B1**
(45) Date of publication and mention of the grant of the patent: **21.08.2024**
(21) Application number: 18886156.1
(22) Date of filing: 03.12.2018
(51) Int. Cl.: B60C 13/00, B60C 11/13

(54) **TIRE**
REIFEN
PNEUMATIQUE

(30) Priority: 08.12.2017 JP 2017236466
(43) Date of publication of application: 14.10.2020
(73) Proprietor: Bridgestone Corporation, Tokyo 104-8340 (JP)
(72) Inventor: IWABUCHI, Sotaro, Tokyo 104-8340 (JP)
(74) Representative: Marks & Clerk LLP
(86) International application number: PCT/JP2018/044418
(87) International publication number: WO 2019/111857

(56) References cited:
- DE-A1- 102015 225 419
- JP-A- 2009 512 584
- JP-A- 2011 235 686
- JP-A- 2014 136 487
- JP-A- 2014 136 487
- JP-A- 2016 084 042
- JP-A- 2016 084 044
- JP-A- 2016 175 458
- JP-A- 2017 081 306
- JP-A- 2017 136 958
- JP-A- 2017 202 784
- JP-A- H11 321 243
- US-A1- 2010 258 231

## Description

### Technical Field

The present invention relates to a tire including fine protrusions formed on its outer surface.

### Background Art

Conventionally, fine protrusions are formed on a side portion of a tire to configure a patterned region with contrast. For example, WO 2012/131089 discloses a technology for allowing a tire side portion to have a high contrast with plural protrusions formed in the entirety of a patterned region.

Reference is also made to JP 2014-136487 A, JP 2017-202784 A and DE 10 2015 225419 A1.

### SUMMARY OF INVENTION

### Technical Problem

A decorative part of a tire side portion includes a region where protrusions are formed. The protrusions control the reflection of light, thereby allowing this region to have a lower brightness than other regions that directly reflect light. However, merely by allowing such a region where protrusions are formed to have a low brightness in the same manner as a whole, the tire has a limited range of expression of the decorative part where the protrusions are formed.

An object of the invention is to broaden the range of expression of a decorative part having a region where protrusions are formed in a tire.

### Solution to Problem

A tire according to the invention includes: a decorative part which is formed on an outer surface of the tire and includes a base surface; a first patterned region in which plural first protrusions protruding from the base surface of the decorative part at a protrusion height of from 0.1 mm to 1.0 mm and intervals of larger than 1.0 mm and 3.0 mm or smaller are formed; and a second patterned region which is arranged in close proximity to the first patterned region in the decorative part and in which plural second protrusions protruding from the base surface at a protrusion height of from 0.1 mm to 1.0 mm and intervals of from 0.1 mm to 1.0 mm are formed, wherein the first protrusions each comprise extensions that extend in plural directions from a base point when viewed from a direction perpendicular to the base surface.

According to the invention, the first patterned region is formed in the decorative part on the outer surface of the tire. Further, in this first patterned region, plural first protrusions, which protrude from the base surface at intervals of larger than 1.0 mm and 3.0 mm or smaller and a protrusion height of from 0.1 mm to 1.0 mm, are formed. By this, a light incident on the first patterned region is attenuated while being repeatedly reflected by opposing side surfaces of the first protrusions, and eventually reflected to the outside.

The first patterned region thus has a lower brightness than other regions where no protrusion is formed, but has a higher brightness than a region where protrusions are formed at a higher density (e.g., a region where protrusions are arranged at intervals of 0.5 mm). Therefore, in the tire, the range of expression of the decorative part having the region where protrusions are formed can be broadened.

In addition, according to the invention, in the decorative part on the outer surface of the tire, the second patterned region is arranged in close proximity to the first patterned region. Further, in this second patterned region, plural second protrusions which protrude from the base surface and have an interval of from 0.1 mm to 1.0 mm and a protrusion height of from 0.1 mm to 1.0 mm are formed. By this, the second patterned region having a lower brightness than the first patterned region is arranged in close proximity to the first patterned region; therefore, the range of expression of the decorative part can be broadened as compared to a case where only the first patterned region is formed in the decorative part.

In addition, the first protrusions each include extensions that extend from a base point in plural directions when viewed from a direction perpendicular to the base surface.

According to the invention, the first protrusions each include extensions that extend from a base point in plural directions when viewed from a direction perpendicular to the base surface. This allows a light to be reflected at different angles by the side surfaces of the first protrusions, so that concentration of the reflected light is inhibited. By this, the first patterned region is prevented from appearing differently even when it is viewed from different angles.

In addition, the protrusion height of the first protrusions formed in the first patterned region and the protrusion height of the second protrusions formed in the second patterned region are different.

According to the invention, the protrusion height of the first protrusions formed in the first patterned region is different from the protrusion height of the second protrusions formed in the second patterned region. Therefore, as compared to a case where the first protrusions and the second protrusions have the same protrusion height, the appearance of the decorative part is modified, so that the range of expression of the decorative part can be broadened.

### Advantageous Effects of Invention

According to the invention, the range of expression of a decorative part having a region where protrusions are formed can be broadened in a tire.

### BRIEF DESCRIPTION OF DRAWINGS

FIG. 1 is a side view of a tire according to a first embodiment of the invention;
FIG. 2 is an enlarged side view illustrating a decorative part of the tire according to the first embodiment of the invention;
FIG. 3 is an enlarged plan view illustrating protrusions that are formed in a medium-brightness region of the decorative part of the tire according to the first embodiment of the invention;
FIG. 4 is a plan view illustrating the protrusions that are formed in the medium-brightness region of the decorative part of the tire according to the first embodiment of the invention;
FIG. 5A is a cross-sectional view illustrating the protrusions that are formed in the medium-brightness and low-brightness regions of the decorative part of the tire according to the first embodiment of the invention;
FIG. 5B is a cross-sectional view illustrating the protrusions that are formed in the medium-brightness and low-brightness regions of the decorative part of the tire according to the first embodiment of the invention;
FIG. 6 is an enlarged plan view illustrating protrusions that are formed in a low-brightness region of the decorative part of the tire according to the first embodiment of the invention;
FIG. 7 is a plan view illustrating the protrusions that are formed in the medium-brightness region of the decorative part of the tire according to the first embodiment of the invention;
FIG. 8 is an enlarged plan view illustrating protrusions that are formed in a decorative part of a tire according to a second embodiment of the invention;
FIG. 9 is a perspective view illustrating a tire according to a third embodiment of the invention not falling under the scope of the appended claims but included merely as an example suitable for understanding the invention;
FIG. 10 is a side view of a tire according to a fourth embodiment of the invention;
FIG. 11 is an enlarged side view illustrating a decorative part of the tire according to the fourth embodiment of the invention;
FIG. 12 is an enlarged plan view illustrating protrusions that are formed in a medium-brightness region of the tire according to the fourth embodiment of the invention;
FIG. 13A is a cross-sectional view illustrating protrusions that are formed in a decorative part of a tire according to a fifth embodiment of the invention; and
FIG. 13B is another cross-sectional view illustrating the protrusions that are formed in the decorative part of the tire according to the fifth embodiment of the invention.

### DESCRIPTION OF EMBODIMENTS

### <First Embodiment>

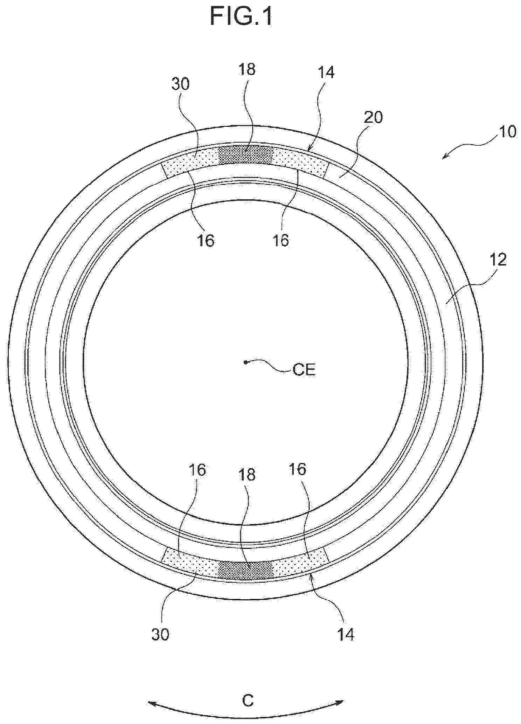

One example of the tire according to the first embodiment of the invention will now be described referring to FIGs. 1 to 7. In these drawings, an arrow C indicates the tire circumferential direction, an arrow R indicates the tire radial direction, and an arrow W indicates the tire width direction.

As illustrated in FIG. 1, decorative parts 14 are formed in a tire side portion 12 of a tire 10. The decorative parts 14 have a circular-arc shape when viewed from an axial direction of the tire 10, and are arranged at two positions that are symmetrical to each other about a tire central axis CE. Further, a base surface 30 that is recessed with respect to other region 20, which is a region of the tire side portion 12 other than the decorative parts 14 and where protrusions and the like are not formed, is formed in each decorative part 14. This base surface 30 constitutes a bottom surface of each decorative part 14 and, when viewed from the tire circumferential direction, the base surface 30 has a curved surface that forms a convex toward the outer side in the width direction of the tire 10. In the present embodiment, the base surface 30 is recessed by 0.4 mm with respect to the other region 20.

In each of the decorative parts 14, a low-brightness region 18 which has a lower brightness than the other region 20 and appears in black, as well as medium-brightness regions 16 which have a lower brightness than the other region 20 but a higher brightness than the low-brightness region 18 and appear in gray, are formed. In other words, the low-brightness region 18 and the medium-brightness regions 16 constitute each decorative part 14. The medium-brightness regions 16 are one example of a first patterned region, and the low-brightness region 18 is one example of a second patterned region.

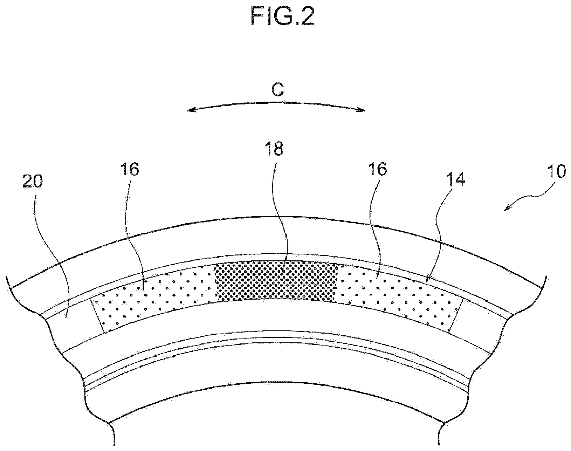

Moreover, as illustrated in FIG. 2, the low-brightness region 18 formed in each decorative part 14 extends along the tire circumferential direction, and the medium-brightness regions 16 are arranged on the respective ends of the low-brightness region 18 in the tire circumferential direction.

The low-brightness region 18 and the medium-brightness regions 16 are formed by arranging irregularities on the parts corresponding to the low-brightness region 18 and the medium-brightness regions 16 in a mold used for molding the tire 10. The low-brightness region 18 and the medium-brightness regions 16 are preferably arranged on the tire radial-direction outer side than a maximum-width position of the tire (a part having the maximum linear distance between the tire side portions) from the standpoint of the visibility of these regions in a state where the tire 10 is mounted on a vehicle.

### (Low-Brightness Region 18)

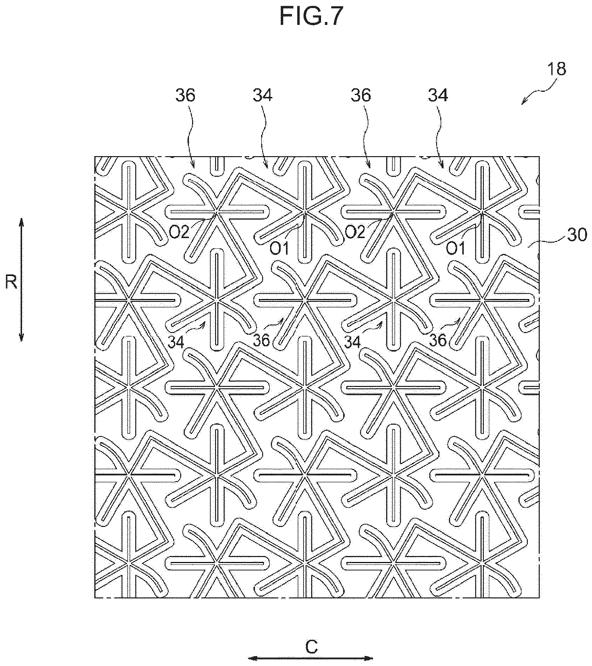

As illustrated in FIG. 7, the low-brightness region 18 includes plural first asterisk protrusions 34 and plural second asterisk protrusions 36, which protrude from the base surface 30. The first asterisk protrusions 34 and the second asterisk protrusions 36 are alternately arranged in both the tire circumferential direction and the tire radial direction. The first asterisk protrusions 34 and the second asterisk protrusions 36 are examples of the second protrusions.

### [First Asterisk Protrusions 34]

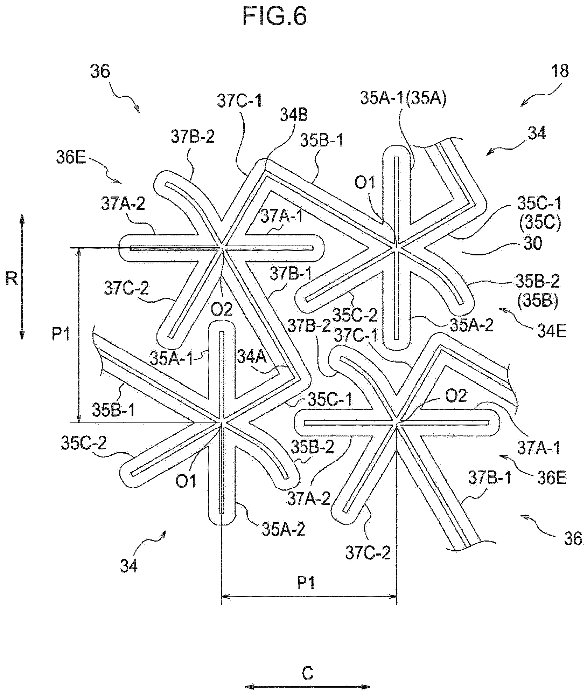

As illustrated in FIG. 6, when viewed from a direction perpendicular to the base surface 30 (e.g., the direction of the rotation axis of the tire 10), the first asterisk protrusions 34 are each constituted by first extensions 35A-1 and 35A-2, second extensions 35B-1 and 35B-2 and third extensions 35C-1 and 35C-2, which all extend in different directions from a center O1 as a base point. These six extensions are hereinafter collectively referred to as "extensions 34E". Pairs of one of the extensions 34E and another extension 34E (excluding those pairs of extensions extending in the opposite directions from the center O1) each form a linear shape that is bent at the center O1.

The first extension 35A-1 and the first extension 35A-2 extend from the center O1 in the opposite directions from each other, whereby a continuous linear shape is formed by the first extension 35A-1 and the first extension 35A-2. The first extension 35A-1 extends from the center O1 on the tire radial-direction outer side, while the first extension 35A-2 extends from the center O1 on the tire radial-direction inner side. The first extension 35A-1 and the first extension 35A-2 have the same length. The first extension 35A-1 and the first extension 35A-2 are hereinafter collectively referred to as "first extensions 35A".

The second extension 35B-1 and the second extension 35B-2 extend from the center O1 in the opposite directions from each other, whereby a continuous linear shape is formed by the second extension 35B-1 and the second extension 35B-2. The second extension 35B-1 and the second extension 35B-2 are each inclined with respect to the tire circumferential direction such that the end on one side of the tire circumferential direction (left side in FIG 6) is positioned on the tire radial-direction outer side than the end on the other side (right side in FIG. 6).

The second extension 35B-1 extends from the center O1 on one side of the tire circumferential direction, while the second extension 35B-2 extends from the center O1 on the other side of the tire circumferential direction. The second extension 35B-1 is longer than the second extension 35B-2. Further, a tip-side portion of the second extension 35B-2 is curved toward the tire radial-direction inner side. The second extension 35B-1 and the second extension 35B-2 are hereinafter collectively referred to as "second extensions 35B".

The third extension 35C-1 and the third extension 35C-2 extend from the center O1 in the opposite directions from each other, whereby a continuous linear shape is formed by the third extension 35C-1 and the third extension 35C-2. The third extension 35C-1 and the third extension 35C-2 are each inclined with respect to the tire circumferential direction such that the end on one side of the tire circumferential direction (left side in FIG. 6) is positioned on the tire radial-direction inner side than the end on the other side (right side in FIG. 6).

The third extension 35C-1 extends from the center O1 on one side of the tire circumferential direction, while the third extension 35C-2 extends from the center O1 on the other side of the tire circumferential direction. The third extension 35C-1 is shorter than the third extension 35C-2. The third extension 35C-1 and the third extension 35C-2 are hereinafter collectively referred to as "third extensions 35C".

The six extensions 34E each form an angle of 60° with adjacent extensions 34E. In other words, the first asterisk protrusions 34 have a shape in which the six extensions 34E radially extend from the center O1.

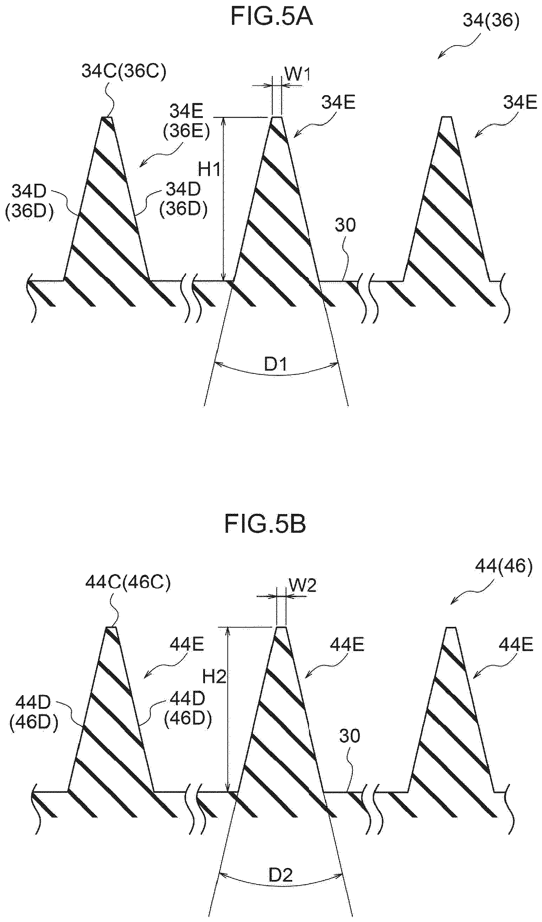

As illustrated in FIG. 5A, the cross-sections of the extensions 34E of the first asterisk protrusions 34 in a direction perpendicular to the respective extending direction have a substantially isosceles triangular shape with a flat top surface 34C. In other words, the first asterisk protrusions 34 each have the top surface 34C and a pair of side surfaces 34D. In the present embodiment, the width of the top surface 34C (W1 in FIG. 5A) is 0.02 mm, and the first asterisk protrusions 34 have an apex angle (D1 in FIG. 5A) of 26[°]. Further, the first asterisk protrusions 34 have a single predetermined height value (H1 in FIG. 5A) of from 0.1 mm to 1.0 mm. When the height of the protrusions (protrusion height) is less than 0.1 mm, it is difficult to mold the protrusions, and there is a risk that the protrusions cannot attenuate an incident light to reduce the brightness to such an extent that makes the protrusions appear in black (this will be described below in detail). Meanwhile, by controlling the height of the protrusions to be 1.0 mm or less, the difference in rigidity between the protrusions and their surrounding parts is made small so that localized concentration of stress is inhibited.

The dimensions of the protrusions in the present embodiment, such as the height and the below-described interval (pitch), can be measured using, for example, ONE-SHOT 3D MEASURING MACROSCOPE VR-3000 Series manufactured by Keyence Corporation.

### [Second Asterisk Protrusions 36]

As illustrated in FIG. 6, the second asterisk protrusions 36 have the same shape as the first asterisk protrusions 34. Specifically, when viewed from a direction perpendicular to the base surface 30, the second asterisk protrusions 36 have a shape obtained by rotating the first asterisk protrusion 34 clockwise by 90[°] about the center O1 and then inverting the first asterisk protrusion 34 thus rotated by 90[°] about the center O1.

In the second asterisk protrusions 36, the parts corresponding to the first extensions 35A-1 and 35A-2, the second extensions 35B-1 and 35B-2, the third extensions 35C-1 and 35C-2 and the center O1 of the first asterisk protrusions 34 are referred to as "first extensions 37A-1 and 37A-2", "second extensions 37B-1 and 37B-2", "third extensions 37C-1 and 37C-2" and "center O2", respectively. These six extensions are hereinafter collectively referred to as "extensions 36E".

Further, in the second asterisk protrusions 36, the part corresponding to the top surface 34C of each first asterisk protrusion 34 is referred to as "top surface 36C". Moreover, in the second asterisk protrusions 36, the parts corresponding to the side surfaces 34D of each first asterisk protrusion 34 are referred to as "side surfaces 36D" (see FIG. 5A).

### [Other]

As illustrated in FIGs. 6 and 7, the first asterisk protrusions 34 and the second asterisk protrusions 36 are alternately arranged in both the tire circumferential direction and the tire radial direction, occupying the entirety of the low-brightness region 18 (see FIG. 2).

The tips of the first extensions 35A-1 and 35A-2 of the first asterisk protrusions 34 are inserted between the second extension 37B-2 and the third extension 37C-1 and between the second extension 37B-1 and the third extension 37C-2, respectively, of the second asterisk protrusion 36 adjacent thereto in the tire radial direction. In addition, the tips of the first extensions 37A-1 and 37A-2 of the second asterisk protrusions 36 are inserted between the second extension 35B-1 and the third extension 35C-2 and between the second extension 35B-2 and the third extension 35C-1, respectively, of the first asterisk protrusion 34 adjacent thereto in the tire circumferential direction.

Further, the tip of the third extension 35C-1 of each first asterisk protrusion 34 is connected with the tip of the second extension 37B-1 of the second asterisk protrusion 36 arranged on the tire radial-direction outer side of the first asterisk protrusion 34. By this, a connecting part 34A is formed. Moreover, the tip of the second extension 35B-1 of each first asterisk protrusion 34 is connected with the tip of the third extension 37C-1 of the second asterisk protrusion 36 arranged on one side of the first asterisk protrusion 34 in the tire circumferential direction. By this, a connecting part 34B is formed.

In the above-described configuration, the first asterisk protrusions 34 and the second asterisk protrusions 36 are connected in a stepwise manner via the connecting parts 34A and 34B from the inner side toward the outer side along the tire radial direction.

In the first asterisk protrusions 34 and the second asterisk protrusions 36 that are adjacent to one another in the tire radial direction and the tire circumferential direction, the interval between the center O1 and the center O2 (hereinafter, referred to as "interval P1") is a single predetermined value of from 0.1 mm to 1.0 mm. When the interval P1 is smaller than 0.1 mm, it is difficult to mold the protrusions. Meanwhile, when the interval P1 is larger than 1.0 mm, there is a risk that the protrusions cannot attenuate an incident light to reduce the brightness to such an extent that makes the protrusions appear in black (this will be described below in detail).

The "low-brightness region 18" according to the present embodiment, which appears in black, refers to a region having a brightness L* value of, for example, lower than 10 as measured using a handy-type spectrocolorimeter (NF333) manufactured by Nippon Denshoku Industries Co., Ltd.

### (Medium-Brightness Region 16)

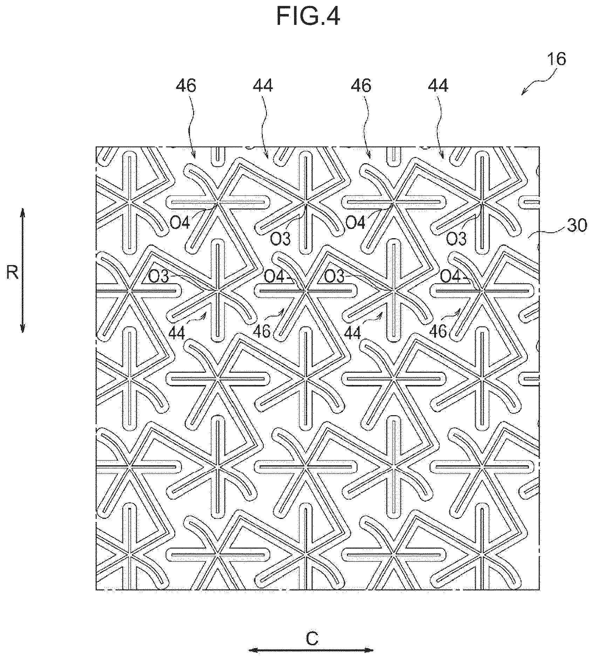

As illustrated in FIG. 4, each medium-brightness region 16 includes plural first asterisk protrusions 44 and plural second asterisk protrusions 46, which protrude from the base surface 30. The first asterisk protrusions 44 and the second asterisk protrusions 46 are alternately arranged in both the tire circumferential direction and the tire radial direction. The first asterisk protrusions 44 and the second asterisk protrusions 46 are examples of the first protrusions.

### [First Asterisk Protrusions 44]

With regard to the first asterisk protrusions 44, those parts different from the first asterisk protrusions 34 (see FIG. 6) of the low-brightness region 18 are mainly described below.

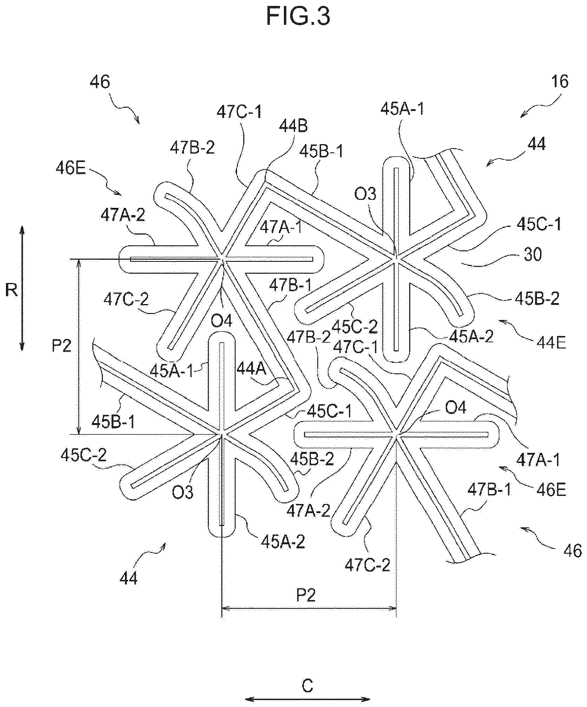

As illustrated in FIG. 3, when viewed from a direction perpendicular to the base surface 30, the first asterisk protrusions 44 have the same shape as the first asterisk protrusions 34 of the low-brightness region 18 (see FIG. 6). In the first asterisk protrusions 44, the parts corresponding to the first extensions 35A-1 and 35A-2, the second extensions 35B-1 and 35B-2, the third extensions 35C-1 and 35C-2 and the center O1 of the first asterisk protrusions 34 are referred to as "first extensions 45A-1 and 45A-2" "second extensions 45B-1 and 45B-2", "third extensions 45C-1 and 45C-2" and "center O3", respectively. These six extensions are hereinafter collectively referred to as "extensions 44E". The lengths of the extensions 44E in their extending directions are those that are obtained by increasing the lengths of the corresponding extensions 34E of the first asterisk protrusions 34 in their extending directions at the same ratio.

As illustrated in FIG. 5B, the cross-sections of the extensions 44E of the first asterisk protrusions 44 in a direction perpendicular to the respective extending directions have a substantially isosceles triangular shape with a flat top surface 44C. In other words, the first asterisk protrusions 44 each have the top surface 44C and a pair of side surfaces 44D. In the present embodiment, the width of the top surface 44C (W2 in FIG. 5B) is 0.02 mm, and the first asterisk protrusions 44 have an apex angle (D2 in FIG. 5B) of 26[°]. Further, the first asterisk protrusions 44 have a single predetermined height value (H2 in FIG. 5B) of from 0.1 mm to 1.0 mm. When the height of these protrusions is less than 0.1 mm, it is difficult to mold the protrusions, and there is a risk that the protrusions cannot attenuate an incident light to reduce the brightness to such an extent that makes the protrusions appear in gray (this will be described below in detail). Meanwhile, by controlling the height of the protrusions to be 1.0 mm or less, the difference in rigidity between the protrusions and their surrounding parts is made small, so that localized concentration of stress is inhibited.

### [Second Asterisk Protrusions 46]

As illustrated in FIG. 3, the second asterisk protrusions 46 have the same shape as the first asterisk protrusions 44. Specifically, when viewed from a direction perpendicular to the base surface 30, the second asterisk protrusions 46 have a shape obtained by rotating the first asterisk protrusion 44 clockwise by 90[°] about the center O3 and then inverting the first asterisk protrusion 44 thus rotated by 90[°] about the center O3.

In the second asterisk protrusions 46, the parts corresponding to the first extensions 45A-1 and 45A-2, the second extensions 45B-1 and 45B-2, the third extensions 45C-1 and 45C-2 and the center O3 of the first asterisk protrusions 44 are referred to as "first extensions 47A-1 and 47A-2", "second extensions 47B-1 and 47B-2", "third extensions 47C-1 and 47C-2" and "center O4", respectively. These six extensions are hereinafter collectively referred to as "extensions 46E".

Further, in the second asterisk protrusions 46, the part corresponding to the top surface 44C of each first asterisk protrusion 44 is referred to as "top surface 46C". Moreover, in the second asterisk protrusions 46, the parts corresponding to the side surfaces 44D of each first asterisk protrusion 44 are referred to as "side surfaces 46D" (see FIG. 5B).

### [Other]

As illustrated in FIG. 3, the first asterisk protrusions 44 and the second asterisk protrusions 46 are alternately arranged in both the tire circumferential direction and the tire radial direction, occupying the entirety of each medium-brightness region 16 (see FIG. 2).

The tips of the first extensions 45A-1 and 45A-2 of the first asterisk protrusions 44 are inserted between the second extension 47B-2 and the third extension 47C-1 and between the second extension 47B-1 and the third extension 47C-2, respectively, of the second asterisk protrusion 46 adjacent thereto in the tire radial direction. In addition, the tips of the first extensions 47 A-1 and 47A-2 of the second asterisk protrusions 46 are inserted between the second extension 45B-1 and the third extension 45C-2 and between the second extension 45B-2 and the third extension 45C-1, respectively, of the first asterisk protrusion 44 adjacent thereto in the tire circumferential direction.

Further, the tip of the third extension 45C-1 of each first asterisk protrusion 44 is connected with the tip of the second extension 47B-1 of the second asterisk protrusion 46 arranged on the tire radial-direction outer side of the first asterisk protrusion 44. By this, a connecting part 44A is formed. Moreover, the tip of the second extension 45B-1 of each first asterisk protrusion 44 is connected with the tip of the third extension 47C-1 of the second asterisk protrusion 46 arranged on one side of the first asterisk protrusion 44 in the tire circumferential direction. By this, a connecting part 44B is formed.

In the above-described configuration, the first asterisk protrusions 44 and the second asterisk protrusions 46 are connected in a stepwise manner via the connecting parts 44A and 44B from the inner side toward the outer side along the tire radial direction.

In the first asterisk protrusions 44 and the second asterisk protrusions 46 that are adjacent to one another in the tire radial direction and the tire circumferential direction, the interval between the center O3 and the center O4 (hereinafter, referred to as "interval P2") is a single predetermined value of larger than 1.0 mm and 3.0 mm or smaller. When the interval P2 is 1.0 mm or smaller, there is risk that an incident light may be excessively attenuated and the brightness may thereby be reduced to such an extent that makes the protrusions appear in black (this will be described below in detail). Meanwhile, when the interval P2 is larger than 3.0 mm, there is a risk that the protrusions cannot attenuate an incident light to reduce the brightness to such an extent that makes the protrusions appear in gray (this will be described below in detail).

The "medium-brightness region 16" according to the present embodiment, which appears in gray, refers to a region having a brightness L* value of, for example, from 10 to 20 as measured using a handy-type spectrocolorimeter (NF333) manufactured by Nippon Denshoku Industries Co., Ltd. Further, in the tire side portion 12, the regions 20 other than the decorative parts 14 (regions where not protrusion is formed) are regions having a brightness L* value of, for example, higher than 20 as measured using a handy-type spectrocolorimeter (NF333) manufactured by Nippon Denshoku Industries Co., Ltd. In other words, the "medium-brightness region 16" appearing in gray is a region having a relatively moderate brightness on the outer surface of the tire 10.

### (Actions and Effects)

Next, the actions and effects of the tire according to the present embodiment will be described.

In the low-brightness regions 18 of the decorative parts 14 of the tire side portion 12, a light incident on the first asterisk protrusions 34 and the second asterisk protrusions 36 that are formed in the low-brightness regions 18 collides with the side surfaces 34D and 36D illustrated in FIG. 5A. This incident light is attenuated while being repeatedly reflected between opposing side surfaces 34D and 36D, and eventually reflected to the outside.

In the medium-brightness regions 16 of the decorative parts 14 of the tire side portion 12, a light incident on the first asterisk protrusions 44 and the second asterisk protrusions 46 that are formed in the medium brightness regions 16 collides with the side surfaces 44D and 46D illustrated in FIG. 5B. This incident light is attenuated while being repeatedly reflected between opposing side surfaces 44D and 46D, and eventually reflected to the outside.

Further, in the other regions 20 of the tire side portion 12 where no protrusion is formed, a light incident thereon is reflected to the outside by the outer surface constituting the respective other regions 20.

The interval P1 between the first asterisk protrusions 34 and the second asterisk protrusions 36 that are formed in the low-brightness regions 18 is a single predetermined value of from 0.1 mm to 1.0 mm. Meanwhile, the interval P1 between the first asterisk protrusions 44 and the second asterisk protrusions 46 that are formed in the medium-brightness regions 16 is a single predetermined value of larger than 1.0 mm and 3.0 mm or smaller. In other words, the density of the protrusions formed in the medium-brightness regions 16 is set to be lower than the density of the protrusions formed in the low-brightness regions 18.

Moreover, since the protrusions have the same apex angle, the ratio of the base surface 30 per unit area in the medium-brightness regions 16 is higher than the ratio of the base surface 30 per unit area in the low-brightness regions 18.

As a result, the amount of the light reflected to the outside by the medium-brightness regions 16 is greater than the amount of the light reflected to the outside by the low-brightness regions 18. In addition, the amount of the light reflected to the outside by the medium-brightness regions 16 is smaller than the amount of the light reflected to the outside by the other regions 20 where no protrusion is formed. In other words, the brightness L* increases in the order of the low-brightness regions 18, the medium-brightness regions 16, and the other regions 20.

Therefore, the low-brightness regions 18 appear more blackish relative to other regions, the other regions 20 appear more whitish relative to other regions, and the medium-brightness regions 16 appear more grayish relative to other regions.

In this manner, by controlling the interval P2 between the first asterisk protrusions 44 and the second asterisk protrusions 46 to be larger than 1.0 mm and 3.0 mm or smaller, the medium-brightness regions 16 which have a lower brightness than the other regions 20 but a higher brightness than the low-brightness regions 18 and appear in gray are formed. Consequently, in the tire 10, the range of the expression of the decorative parts 14 including regions where protrusions are formed can be broadened (variations of the method therefor can be increased).

The extensions 44E of each first asterisk protrusion 44 extend in different directions, and the extensions 46E of each second asterisk protrusion 46 also extend in different directions. By this, the medium-brightness regions 16 can be prevented from appearing differently even when the medium-brightness regions 16 are viewed from different angles. The same effect is exerted also for the low-medium regions 18.

In addition, the first asterisk protrusions 44 formed in the medium-brightness regions 16 are each constituted by six extensions 44E that extend in different directions and are connected at the center O3, and the second asterisk protrusions 46 are each constituted by six extensions 46E that extend in different directions and are connected at the center O4. Therefore, the first asterisk protrusions 44 and the second asterisk protrusions 46 are unlikely to collapse, and the durability of each of the first asterisk protrusions 44 and the second asterisk protrusions 46 can be improved. The same effect is exerted also for the first asterisk protrusions 34 and the second asterisk protrusions 36.

Further, the low-brightness regions 18 are formed in close proximity to the medium-brightness regions 16. As a result, the low-brightness regions 18 appearing more blackish relative to the other regions 20, the medium-brightness regions 16 appearing more grayish relative to the other regions 20, and the other regions 20 appearing more whitish relative to the low-brightness regions 18 are arranged in series. Therefore, a gradual change in the brightness L* (gradation effect) can be expressed.

Moreover, the first asterisk protrusions 44 and the second asterisk protrusions 46 are connected in a stepwise manner via the connecting parts 44A and 44B. This allows the first asterisk protrusions 44 and the second asterisk protrusions 46 to support with one another via the connecting parts 44A and 44B, whereby collapse of the first asterisk protrusions 44 and the second asterisk protrusions 46 is inhibited, and the durability can be improved.

### <Second Embodiment>

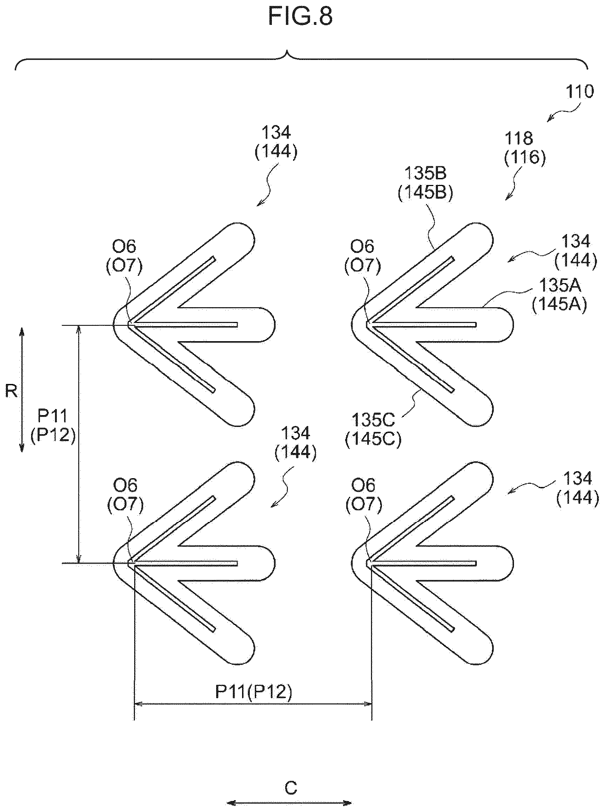

Next, a tire 110 according to the second embodiment of the invention will be described referring to FIG. 8. With regard to the tire 110 of the second embodiment, those parts different from the tire 10 of the first embodiment are mainly described.

As illustrated in FIG. 8, protrusions 134 formed in low-brightness regions 118 of the tire 110 each have an extension 135Awhich extends on the other side of the tire circumferential direction from a center O6 as a base point. Further, the protrusions 134 each have an extension 135B which extends from the center O6 on the other side of the tire circumferential direction toward the tire radial-direction outer side, and an extension 135C which extends from the center O6 on the other side of the tire circumferential direction toward the tire radial-direction inner side. In the protrusions 134 that are adjacent to one another in the tire radial direction and the tire circumferential direction, the interval between one center O6 and another center O6 (hereinafter, referred to as "interval P 11 ") is a single predetermined value of from 0.1 mm to 1.0 mm. The low-brightness regions 118 are one example of the second patterned region, and the protrusions 134 are one example of the second protrusions.

As illustrated in FIG. 8, protrusions 144 formed in medium-brightness regions 116 of the tire 110 each have an extension 145A which extends on the other side of the tire circumferential direction from a center O7 as a base point. Further, the protrusions 144 each have an extension 145B which extends from the center O7 on the other side of the tire circumferential direction toward the tire radial-direction outer side, and an extension 145C which extends from the center O7 on the other side of the tire circumferential direction toward the tire radial-direction inner side. In the protrusions 144 that are adjacent to one another in the tire radial direction and the tire circumferential direction, the interval between one center O7 and another center O7 (hereinafter, referred to as "interval P12") is a single predetermined value of larger than 1.0 mm and 3.0 mm or smaller. The medium-brightness regions 116 are one example of the first patterned region, and the protrusions 144 are one example of the first protrusions.

The effects of the second embodiment are the same as those of the first embodiment, except that the effect exerted by connecting the protrusions.

### <Third Embodiment>

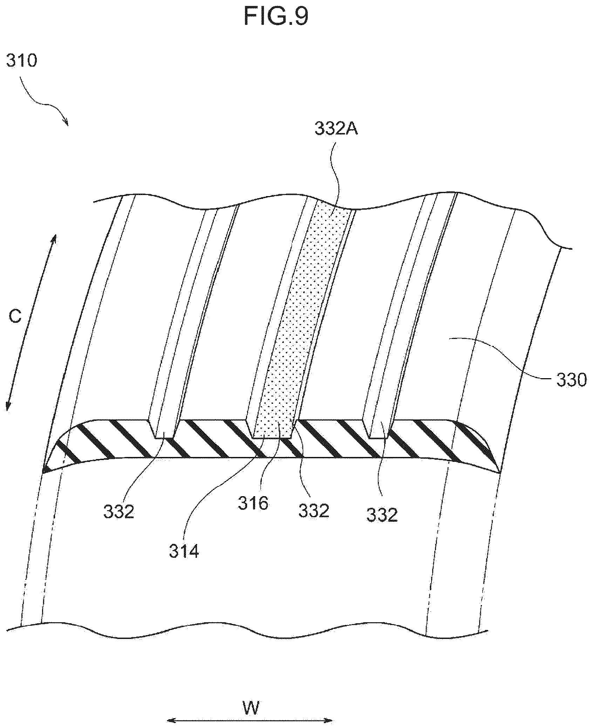

Next, a tire 310 according to the third embodiment of the invention, not falling under the scope of the appended claims but included merely as an example suitable for understanding the invention, will be described referring to FIG. 9. With regard to the tire 310 of the third embodiment, those parts different from the tire 10 of the first embodiment are mainly described.

A decorative part 314 of the tire 310 is formed on a tread 330 on the tire radial-direction outer side of the tire 310. Specifically, on the tread 330 of the tire 310, plural circumferential grooves 332 extending along the tire circumferential direction are formed apart from one another in the tire width direction (arrow W in FIG. 9). The decorative part 314 is formed in one of the circumferential grooves 332 that is on the center side in the tire width direction. Further, in the decorative part 314, only a medium-brightness region 316 is formed, and this medium-brightness region 316 includes plural first asterisk protrusions 44 and plural second asterisk protrusions 46 (see FIG. 3), which protrude from a base surface 332A constituting the bottom surface of the circumferential groove 332. The medium-brightness region 316 is one example of the first patterned region.

The effects of the third embodiment are the same as those of the first embodiment that are exerted by allowing the tire 10 to have only the medium-brightness region 16.

### <Fourth Embodiment>

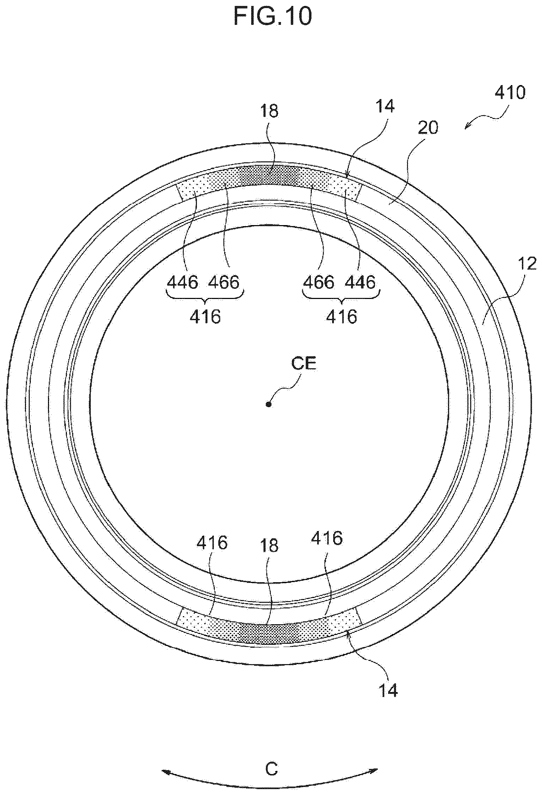

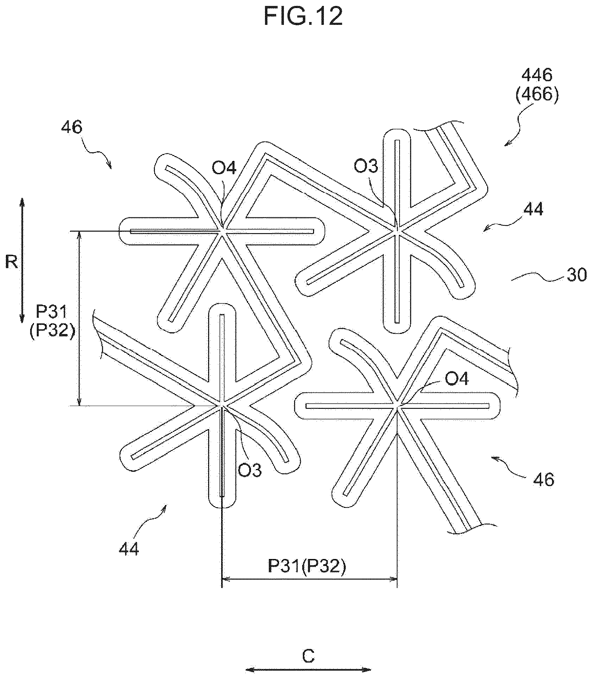

Next, a tire 410 according to the fourth embodiment of the invention will be described referring to FIGs. 10 to 12. With regard to the tire 410 of the fourth embodiment, those parts different from the tire 10 of the first embodiment are mainly described.

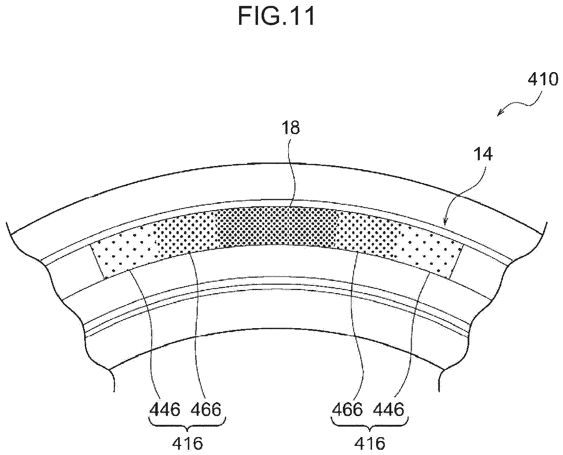

As illustrated in FIGs. 10 and 11, medium-brightness regions 416 of the tire 410 each include: a first medium-brightness region 446, which is formed on the respective end portions of the decorative part 14 in the tire circumferential direction; and a second medium-brightness region 466, which is formed between the first medium-brightness region 446 and the low-brightness region 18.

As illustrated in FIG. 11, the first medium-brightness region 446 includes plural first asterisk protrusions 44 and plural second asterisk protrusions 46, which protrude from the base surface 30. In the first asterisk protrusions 44 and the second asterisk protrusions 46 that are adjacent to one another in the tire radial direction and the tire circumferential direction, the interval P31 between the center O3 and the center O4 is a single predetermined value of larger than 1.0 mm and 3.0 mm or smaller. The first medium-brightness region 446 and the second medium-brightness region 466 are examples of the first patterned region.

Further, as illustrated in FIG. 11, the second medium-brightness region 466 includes plural first asterisk protrusions 44 and plural second asterisk protrusions 46, which protrude from the base surface 30. In the first asterisk protrusions 44 and the second asterisk protrusions 46 that are adjacent to one another in the tire radial direction and the tire circumferential direction, the interval P32 between the center O3 and the center O4 is a single predetermined value that is smaller than the above-described interval P31 in a range of larger than 1.0 mm and 3.0 mm or smaller.

In this configuration, the brightness L* decreases in a stepwise manner in the order of the first medium-brightness region 446, the second medium-brightness region 466, and the low-brightness region 18. By this, a gradual change in the brightness L* (gradation effect) can be effectively expressed.

Other effects of the fourth embodiment are the same as those of the first embodiment.

### <Fifth Embodiment>

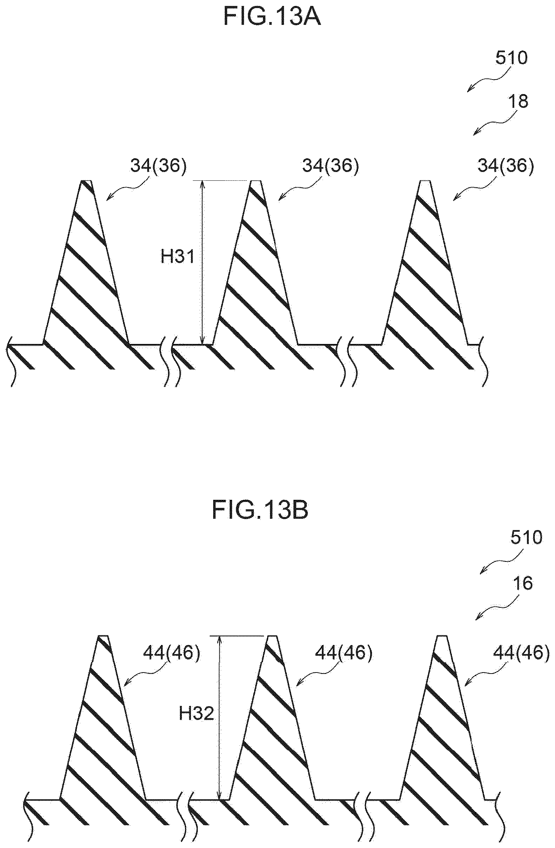

Next, a tire 510 according to the fifth embodiment of the invention will be described referring to FIG. 13. With regard to the tire 510 of the fifth embodiment, those parts different from the tire 10 of the first embodiment are mainly described.

The protrusion height H31 of the first asterisk protrusions 34 and the second asterisk protrusions 36 that are formed in the low-brightness regions 18 of the tire 510 is a single predetermined value of from 0.1 mm to 1.0 mm (see FIG. 13A).

Further, the protrusion height H32 of the first asterisk protrusions 44 and the second asterisk protrusions 46 that are formed in the medium-brightness regions 16 of the tire 510 is also a single value of from 0.1 mm to 1.0 mm but is different from the value of the above-described protrusion height H31 (see FIG. 13B).

In this manner, by controlling the protrusion height H31 of the protrusions formed in the low-brightness regions 18 and the protrusion height H32 of the protrusions formed in the medium-brightness regions 16 to be different from each other, the appearance of the decorative parts 14 is modified as compared to a case where the protrusion height H31 and the protrusion height H32 are the same, so that the range of expression of the decorative parts 14 can be broadened.

Thus far, the invention has been described in detail referring to specific embodiments; however, the invention is not restricted to the above-described embodiments, and it is apparent to those of ordinary skill in the art that various other embodiments are feasible within the scope of the invention as defined by the appended claims. For instance, in the first embodiment, the first asterisk protrusions 34 and 44 and the second asterisk protrusions 36 and 46 have an apex angle (D1 in FIG. 7) of 26[°]; however, these protrusions may have another apex angle. An increase in the apex angle D1 leads to an increase in the ratio of the light that is reflected by the side surfaces 34D, 44D, 36D and 46D and returns back to the incident direction, as a result of which the brightness L* is relatively increased.

### DESCRIPTION OF SYMBOLS

10: tire, 14: decorative part, 16: medium-brightness region (one example of first patterned region), 18: low-brightness region (one example of second patterned region), 30: base surface, 34: first asterisk protrusion (one example of second protrusion), 36: second asterisk protrusion (one example of second protrusion), 36E: extension, 44: first asterisk protrusion (one example of first protrusion), 46: second asterisk protrusion (one example of first protrusion), 46E: extension, 110: tire, 116: medium-brightness region (one example of first patterned region), 118: low-brightness region (one example of second patterned region), 134: protrusion (one example of second protrusion), 135A: extension, 135B: extension, 135C: extension, 144: protrusion (one example of first protrusion), 145A: extension, 145B: extension, 145C: extension, 210: tire, 216: medium-brightness region (one example of first patterned region), 218: low-brightness region (one example of second patterned region), 234: protrusion (one example of second protrusion), 244: protrusion (one example of first protrusion), 310: tire, 314: decorative part, 316: medium-brightness region (one example of first patterned region), 332A: base surface, 410: tire, 416: medium-brightness region (one example of first patterned region), 446: first medium-brightness region (one example of first patterned region), 466: second medium-brightness region (one example of first patterned region), 510: tire

## Claims

1. A tire (10, 110, 210, 310, 410, 510) comprising:
a decorative part (14, 314) which is formed on an outer surface of the tire (10, 110, 210, 310, 410, 510) and comprises a base surface (30, 332A);
a first patterned region (16, 116, 216, 316, 416, 446, 466) in which plural first protrusions (44, 46, 144, 244) protruding from the base surface (30, 332A) of the decorative part (14, 314) at a protrusion height of from 0.1 mm to 1.0 mm and intervals of larger than 1.0 mm and 3.0 mm or smaller are formed; and
a second patterned region (18, 118, 218) which is arranged in close proximity to the first patterned region (16, 116, 216, 316, 416, 446, 466) in the decorative part (14, 314) and in which plural second protrusions (34, 36, 134, 234) protruding from the base surface (30, 332A) at a protrusion height of from 0.1 mm to 1.0 mm and intervals of from 0.1 mm to 1.0 mm are formed, **characterized in that**:
the first protrusions (44, 46, 144, 244) each comprise extensions (36E, 46E, 135A, 135B, 135C, 145A, 145B, 145C) that extend in plural directions from a base point when viewed from a direction perpendicular to the base surface (30, 332A);
wherein the protrusion height of the first protrusions (44, 46, 144, 244) formed in the first patterned region (16, 116, 216, 316, 416, 446, 466) and the protrusion height of the second protrusions (34, 36, 134, 234) formed in the second patterned region (18, 118, 218) are different.

## Patentansprüche

1. Reifen (10, 110, 210, 310, 410, 510), der Folgendes umfasst:
einen dekorativen Teil (14, 314), der auf einer Außenfläche des Reifens (10, 110, 210, 310, 410, 510) geformt ist und eine Basisfläche (30, 332A) umfasst;
einen ersten gemusterten Bereich (16, 116, 216, 316, 416, 446, 466), in dem mehrere erste Vorsprünge (44, 46, 144, 244), die von der Basisfläche (30, 332A) des dekorativen Teils (14, 314) mit einer Vorsprungshöhe von 0,1 mm bis 1,0 mm und Abständen von mehr als 1,0 mm und 3,0 mm oder kleiner vorspringen, geformt sind; und
einen zweiten gemusterten Bereich (18, 118, 218), der in enger Nähe zu dem ersten gemusterten Bereich (16, 116, 216, 316, 416, 446, 466) in dem dekorativen Teil (14, 314) angeordnet ist und in dem mehrere zweite Vorsprünge (34, 36, 134, 234), die von der Basisfläche (30, 332A) mit einer Vorsprungshöhe von 0,1 mm bis 1,0 mm und Abständen von 0,1 mm bis 1,0 mm vorspringen, geformt sind, **dadurch gekennzeichnet, dass**:
die ersten Vorsprünge (44, 46, 144, 244) jeweils Erweiterungen (36E, 46E, 135A, 135B, 135C, 145A, 145B, 145C) umfassen, die sich in mehreren Richtungen von einem Basispunkt aus erstrecken, wenn sie aus einer Richtung senkrecht zu der Basisfläche (30, 332A) betrachtet werden;
wobei die Vorsprungshöhe der ersten Vorsprünge (44, 46, 144, 244), die in dem ersten gemusterten Bereich (16, 116, 216, 316, 416, 446, 466) geformt sind, und die Vorsprungshöhe der zweiten Vorsprünge (34, 36, 134, 234), die in dem zweiten gemusterten Bereich (18, 118, 218) geformt sind, unterschiedlich sind.

## Revendications

1. Pneumatique (10, 110, 210, 310, 410, 510), comprenant :
une partie décorative (14, 314) qui est formée sur une surface externe du pneumatique (10, 110, 210, 310, 410, 510) et comprend une surface de base (30, 332A) ;
une première région à motifs (16, 116, 216, 316, 416, 446, 466), dans laquelle sont formées plusieurs premières saillies (44, 46, 144, 244) faisant saillie depuis la surface de base (30, 332A) de la partie décorative (14, 314) à une hauteur de saillie comprise entre 0,1 mm et 1,0 mm et à des intervalles supérieurs à 1,0 mm et 3,0 mm ou plus réduits ; et
une deuxième région à motifs (18, 118, 218) qui est agencée à proximité étroite de la première région à motifs (16, 116, 216, 316, 416, 446, 466) dans la partie décorative (14, 314) et dans laquelle sont formées plusieurs deuxièmes saillies (34, 36, 134, 234) faisant saillie depuis la surface de base (30, 332A) à une hauteur de saillie comprise entre 0,1 mm et 1,0 mm et à des intervalles compris entre 0,1 mm et 1,0 mm, **caractérisé en ce que** :
les premières saillies (44, 46, 144, 244) comprennent chacune des extensions (36E, 46E, 135A, 135B, 135C, 145A, 145B, 145C) qui s'étendent dans plusieurs directions à partir d'un point de base, vues à partir d'une direction perpendiculaire à la surface de base (30, 332A) ;
dans lequel la hauteur de saillie des premières saillies (44, 46, 144, 244) formées dans la première région à motifs (16, 116, 216, 316, 416, 446, 466) et la hauteur de saillie des deuxièmes saillies (34, 36, 134, 234) formées dans la deuxième région à motifs (18, 118, 218) sont différentes.
